# EUROPÄISCHE PATENTSCHRIFT

(11) **EP 2 501 248 B1**
(45) Veröffentlichungstag und Bekanntmachung des Hinweises auf die Patenterteilung: **01.08.2018**
(21) Anmeldenummer: 10779668.2
(22) Anmeldetag: 09.11.2010
(51) Int. Cl.: A43B 5/02, A43B 23/02, B29D 35/14

(54) **VERFAHREN ZUR HERSTELLUNG EINES SCHUHS SOWIE SCHUH**
METHOD FOR MANUFACTURING A FOOTWEAR AND FOOTWEAR
PROCÉDÉ POUR LA FABRICATION D'UNE CHAUSSURE ET CHAUSSURE

(30) Priorität: 19.11.2009 AT 18402009
(43) Veröffentlichungstag der Anmeldung: 26.09.2012
(73) Patentinhaber: Fischer Sports GmbH, 4910 Ried/Innkreis (AT)
(72) Erfinder: WIESER, Gerhard, 3141 Kapelln (AT)
(74) Vertreter: Sonn & Partner Patentanwälte
(86) Internationale Anmeldenummer: PCT/AT2010/000426
(87) Internationale Veröffentlichungsnummer: WO 2011/060463

(56) Entgegenhaltungen:
- EP-A2- 0 363 629
- WO-A1-92/22224
- WO-A1-2005/107509
- FR-A1- 2 780 619
- US-A- 4 447 967

## Beschreibung

Die Erfindung betrifft ein Verfahren zur Herstellung eines Schuhs, insbesondere Sportschuhs, mit einem ein flexibles Schaftmaterial aufweisenden Schaft und einer Sohle, wobei das flexible Schaftmaterial in eine Spritzgussform eingelegt wird, ein Kunststoffmaterial abschnittsweise auf das Schaftmaterial aufgespritzt wird, und das mit dem Kunststoffmaterial verstärkte Schaftmaterial aus der Spritzgussform entnommen wird, sowie einen Schuh, insbesondere Sportschuh, mit einem ein flexibles Schaftmaterial aufweisenden Schaft, der zumindest abschnittsweise, vorzugsweise in einem Bereich des Vorfußes, ein Verstärkungselement aufweist, das aus einem Kunststoffmaterial größerer Härte als das Schaftmaterial besteht, wobei der Schaft mit einer Sohle verbunden ist, wobei das Verstärkungselement auf dem flexiblen Schaftmaterial aufgespritzt ist.

Die FR 2 780 619 A1 zeigt eine Technik der eingangs angeführten Art zur Herstellung eines Schuhschafts, welcher eine Verstärkung aus einem thermoplastischen Kunststoffmaterial aufweist. Die Verstärkung erstreckt sich im fertigen Schuh vom Fersenbereich seitlich am Schuhschaft nach vorne.

Aus dem Stand der Technik sind weiters verschiedenste Schuhe, insbesondere Sportschuhe, bekannt, welche hinsichtlich eines hohen Tragekomforts einen Schaft aus einem flexiblen Material aufweisen und bei welchen das Schaftmaterial zur besseren Kräfteübertragung zumindest abschnittsweise mit verstärkenden bzw. versteifenden Elementen verbunden ist.

Hierbei sind insbesondere verschiedenste Sportschuhe bekannt, welche eine vergleichsweise steife Fersenkappe aufweisen, deren seitliche Wände sich bis in den Bereich einer metatarsophalangischen Biegezone erstrecken. Ein derartiger Sportschuh, insbesondere Langlaufschuh, ist beispielsweise aus der EP 787 444 B1 bekannt; aber auch aus der DE 29 38 514 A, der FR 2 208 279 A, der EP 643 931 A sowie der DE 88 07 537 U sind bereits verschiedenste Sportschuhe mit vergleichbaren Fersenverstärkungsteilen bekannt, um dem Benutzer des Sportschuhs bis in den Bereich der metatarsophalangischen Biegezone eine besonders hohe Stabilität anzubieten. Nachteilig bei diesen bekannten Fersenverstärkungsteilen ist insbesondere, dass die Verbindung des steifen Materials der Fersenverstärkung, die beispielsweise aus einem Karbon- oder Glasfaser-verstärkten Kunststoffmaterial bestehen kann, mit dem aus einem Gewebe oder Leder bestehenden flexiblen Schaftmaterial schwierig herzustellen ist bzw. dass sich die Verbindung, zumeist Klebeverbindung, aufgrund der Beanspruchung des Schuhs ungewollterweise löst. Zudem ist auch nachteilig, dass aufgrund der die Ferse umfassenden Ausgestaltung des Verstärkungselements die Gefahr von Druckstellen im Fersenbereich erhöht wird.

Aus der FR 2 856 252 A1 ist eine andersartige Zehenkappe für Sicherheitsschuhe bekannt. Die Zehenkappe weist eine aus einem thermoplastischen Material gefertigte Hülle auf, die den Zehenbereich des Trägers schützt. An einem rückseitigen Öffnungsrand der Hülle ist eine umlaufende Verbindung aus einem elastischen Kunststoffmaterial (insbesondere Polyurethan oder Silikon) vorgesehen, welche durch Spritzgießen mit der Zehenkappe verbunden wird. Die abschnittsweise Verstärkung eines flexiblen Schaftmaterial ist jedoch nicht beschrieben.

Aus der JP 2001179850 A ist weiters ein Freizeitschuh bekannt, bei dem eine Sohle auf eine Innensohle spritzgegossen wird.

Das in der EP 0 363 629 A2 gezeigte Verfahren zur Herstellung eines Schuhblatts beschreibt ein Ledermaterial, das zwischen korrespondierenden Gießwerkzeugteilen angeordnet wird, von denen eines eine Gussform entsprechend dem Negativ des Schuhblatts aufweist. Anschließend wird ein Kunststoffmaterial (z.B. PVC) in die Gussform eingespritzt.

Die US 4,447,967 betrifft die Herstellung eines Sportschuhs, wobei eine Verstärkungsstruktur aus einem Plastikmaterial auf einen Schaft aufgespritzt wird.

Die WO 92/22224 A1 offenbart die Herstellung eines Fußballschuhs, wobei ein Futter mittels Spritzgießen mit einem Elastomermaterial versehen wird, welches Ballkontaktflächen ausbildet.

Ziel der vorliegenden Erfindung ist demzufolge, ein Verfahren zur Herstellung eines Schuhs bzw. einen Schuh zu schaffen, weleher einerseits dem Benutzer einen gegenüber ausschließlich aus flexiblem Schaftmaterial bestehendem Schuh erhöhten Halt bietet, wobei der Schuh einen eine vergleichsweise hohe Torsionsstabilität aufweisenden Schaft aufweisen soll, der zugleich jedoch einfach herzustellen ist und bei welchem die Verbindung zwischen dem Verstärkungselement und dem flexiblen Schaftmaterial auch hohen Beanspruchungen standhält.

Erfindungsgemäß wird dies durch ein Verfahren erzielt, bei welchem das mit dem Kunststoffmaterial verstärkte Schaftmaterial aus der Spritzgussform entnommen wird und zur Ausbildung der gewünschten Form des Schaftes über einen Leisten gezogen wird, wobei das das Schaftmaterial verstärkende Kunststoffmaterial zumindest abschnittsweise auf eine Sohlenseite des Leisten gezogen wird, bevor die Sohle mit dem Schaft verbunden wird.

Durch die Verbindung des Schaftmaterials mit dem ein Verstärkungselement bildenden Kunststoffmaterial im Spritzgussverfahren ergibt sich auf einfache Weise ein besonders inniger Verbund zwischen dem Schaftmaterial und dem Kunststoffmaterial des Verstärkungselements, so dass die Gefahr, dass sich die Verbindung zwischen den beiden Materialien ungewollterweise bei einem mittels des erfindungsgemäßen Verfahrens hergestellten Schuh aufgrund von Beanspruchungen wieder löst, gegenüber mittels bekannter Verfahren hergestellten Schuhen deutlich verringert werden kann.

Da das verstärkende Kunststoffmaterial somit nach dem Aufspritzen auf das Schaftmaterial plastisch verformt wird, um das Kunststoffmaterial von der Oberseite des Leistens auf dessen Sohlenseite umzubiegen, sind der Materialwahl natürliche Grenzen gesetzt, da Materialien ausgesprochen hoher Steifigkeit, wie beispielsweise Karbonfaser-verstärkte Kunststoffe, in einem derartigen Verfahren nicht verarbeitet werden könnten. Vorzugsweise wird demzufolge bei dem erfindungsgemäßen Verfahren, bei welchem Abschnitte des versteifenden Kunststoffmaterials auf die Sohlenseite des Leistens gezogen werden, ein thermoplastisches Polyurethan zur Verstärkung des Schaftmaterials verwendet, das vorzugsweise einen Härtegrad nach Shore A zwischen 40 und 90 aufweist. Aufgrund der plastischen Verformung des Versteifungsmaterials, mit welcher dieses im Wesentlichen schalenförmig verbogen wird, kann trotz der - für ein Versteifungsmaterial - vergleichsweise geringen Materialhärte eine hohe Torsionsstabilität erzielt werden, welche insbesondere im Bereich des Vorfuß-Schaftes zweckmäßig ist.

Hinsichtlich einer einfachen Herstellung, bei welcher sich die beiden Materialien, d.h. das Schaftmaterial und das auf dem Schaft aufgespritzte Kunststoffmaterial innig miteinander verbinden, ist es von Vorteil, wenn das Schaftmaterial in Form einer planen Fläche in die Spritzgussform eingelegt wird.

Wenn das Schaftmaterial auf die gewünschten Konturen nach der Entnahme aus der Spritzgussform zugeschnitten wird, können mit einer einzigen - herkömmlichen - Spritzgussform verschiedenste Konturen bzw. Konfektionen von Schuhen hergestellt werden. Sofern die Spritzgussform jedoch an eine spezielle Schaftgeometrie angepasst ist, kann alternativ der Zuschnitt der gewünschten Kontur auch vor dem Aufspritzen des das Schaftmaterial verstärkenden Kunststoffmaterials vorgenommen werden.

Hinsichtlich einer aus verfahrenstechnischer Sicht möglichst unaufwendigen Herstellung des Schuhs ist es günstig, wenn vor dem Überziehen über den Leisten weitere Teile des Schuhs, insbesondere eine Fersenkappe, mit dem Schaftmaterial verbunden werden. Die Verbindung zwischen einem die gewünschten Schaftkonturen aufweisenden Schaftmaterial mit den restlichen Teilen des Schuhs, wie z.B. der Fersenkappe und dergl., auszuführen, sofern das Schaftmaterial noch plan, d.h. zweidimensional, ausgebildet ist, ist grundsätzlich im Schuhmacherwesen bekannt; dieses Zusammenfügen der restlichen Teile des Schuhs mittels Nähen, Kleben, allenfalls unter Verwendung sog. Untertritte bzw. Schärfschnitte, mit dem Schaftmaterial wird üblicherweise als Herstellung eines Rohschafts bezeichnet.

Um eine geometrisch saubere Verbindungsfläche mit der Sohle zu erzielen, ist es günstig, wenn ein Ausgleichselement zwischen beabstandeten sohlenseitigen Rändern des mit dem Kunststoffmaterial verstärkten Schaftmaterials angeordnet wird, bevor die Sohle mit dem Schaft verbunden wird. Hinsichtlich einer zuverlässigen Verbindung zwischen dem Schaft und der Sohle ist es von Vorteil, wenn das das Schaftmaterial verstärkende Kunststoffmaterial mit der Sohle verklebt oder verschweißt wird. Insbesondere lässt das verstärkende Kunststoffmaterial, das der Oberseite der Sohle zugewandt ist, - im Gegensatz zu herkömmlichen Gewebe- oder Vliesmaterialien - auch eine Verbindung zwischen dem Schaft und der Sohle durch ein Schweißverfahren, wie z.B. ein Hochfrequenzschweißen oder Ultraschallschweißen, zu, so dass auf den Einsatz von Klebstoff verzichtet werden kann. In diesem Fall ist es insbesondere günstig, wenn das Kunststoffmaterial die gesamte der Oberseite der Sohle zugewandte Fläche bedeckt, so dass eine besonders innige Verbindung zwischen Sohle und dem verstärkenden Kunststoffmaterial hergestellt werden kann.

Der Schuh der eingangs angeführten Art ist dadurch gekennzeichnet, dass das Verstärkungselement zumindest abschnittsweise in einem an die Sohle angrenzenden Bereich des Schafts vorgesehen ist, wobei sich das Verstärkungselement bis in den Bereich zwischen der Sohle und einem sohlenseitigen Schaftabschnitt hineinerstreckt. Mittels des aufgespritzten Kunststoff-Verstärkungselements auf dem flexiblen Schaftmaterial ergeben sich die gleichen Vorteile wie bereits in Zusammenhang mit dem erfindungsgemäßen Verfahren vorstehend erläutert, so dass zwecks Vermeidung von Wiederholungen hierauf verwiesen wird. Durch das Vorsehen eines im Vorfußbereich des Schafts angeordneten Verstärkungselements kann insbesondere die Torsionsstabilität in diesem Bereich erhöht werden, was bei der bevorzugten Ausgestaltung als Langlaufschuh von besonderem Vorteil ist. Durch das Aufspritzen der Verstärkungselemente auf das Schaftmaterial ist es vorteilhafterweise auch nicht erforderlich an der Innen- und/oder Außenseite des Schafts vorgesehene Verstärkungselemente mit einer Fersenkappe zu verbinden; vielmehr können die Verstärkungselemente gesondert von der Fersenkappe ausgebildet werden und an einer beliebigen Stelle des Schafts aufgespritzt werden. Demzufolge kann vorteilhafterweise auch ein gegenüber den Verstärkungselementen vergleichsweise weicher Fersenteil vorgesehen sein.

Weiters wird durch die erfindungsgemäße Ausbildung der Fuß des Benutzers von dem an die Sohle angrenzenden Bereich des Verstärkungselements zumindest abschnittsweise, vorteilhafterweise insbesondere im Bereich des Vorfußes, eingefasst, wobei sich aufgrund der Erstreckung des Versteifungselements in den sohlenseitigen Bereich des Schafts, d.h. in einen Abschnitt zwischen dem flexiblen Schaftmaterial und der Oberseite der Sohle, nach Aufbringen der Sohle ein besonders inniger Verbund ergibt, so dass aufgrund des Gesamtverbunds der unterschiedlichen Materialien ein Schuh mit vergleichsweise guter Torsionsstabilität erzielt wird. In diesem Zusammenhang ist es insbesondere günstig, wenn die sohlenseitige Erstreckungsbreite des Verstärkungselements zumindest in einem Bereich mindestens 10mm beträgt, so dass über eine vergleichsweise große Fläche eine Kräfteübertragung zwischen der Sohle und dem Verstärkungselement erzielt wird.

Um eine weitgehend ebene Fläche zu schaffen, welche für eine gute Verbindung mit der Sohle zweckdienlich ist, ist es von Vorteil, wenn zwischen beabstandeten sohlenseitigen Rändern des Verstärkungselements ein Ausgleichselement angeordnet ist. Um auf einfache Weise die Torsionssteifigkeit des Schuhs zu erhöhen, ist es von Vorteil, wenn das Ausgleichselement aus einem Material besteht, das ein Elastizitätsmodul größer 200 MPa aufweist, vorzugsweise einem Karbon- oder Glasfaser-verstärkten Kunststoff.

Sofern das Verstärkungselement im Wesentlichen die gesamte Fläche der dem Schaft zugewandten Seite der Sohle bedeckt, kann vorzugsweise mittels einer Schweißverbindung eine besonders innige Verbindung zwischen dem Schaft und der Sohle erzielt werden.

Um eine innige Verbindung zwischen dem Schaftmaterial und einem auf dem flexiblen Schaftmaterial aufgespritzten Kunststoffmaterial zu ermöglichen, ist es günstig, wenn als Schaftmaterial ein eine Kunststoff-Beschichtung, insbesondere eine Beschichtung aus Polyvinylchlorid (PVC) oder Polyurethan (PUR), aufweisendes Gewebe oder Vlies vorgesehen ist.

Als Verstärkungsmaterial ist es insbesondere von Vorteil, wenn das Kunststoffmaterial des Verstärkungselements einen Härtegrad nach Shore A zwischen 40 und 90 aufweist. Demnach weist das Verstärkungselement im Vergleich zu anderen Verstärkungsmaterialien, wie z.B. faserverstärktem Kunststoff, eine vergleichsweise geringe Härte auf, so dass sichergestellt ist, dass das Kunststoffmaterial bei der Herstellung des Schuhs auch in den sohlenseitigen Bereich des Schafts hineingezogen werden kann, d.h. dass es auf einfache Weise plastisch verformt werden kann. Hinsichtlich einer zuverlässigen Verbindung des Verstärkungselements mit dem Schaftmaterial ist es günstig, wenn das Verstärkungselement aus einem thermoplastischen Polyurethan besteht.

Die Erfindung wird nachstehend anhand eines in den Zeichnungen dargestellten bevorzugten Ausführungsbeispiels, auf das sie jedoch nicht beschränkt sein soll, noch näher erläutert. Im Einzelnen zeigen in den Zeichnungen:
Fig. 1 eine schematische Schnittansicht einer Spritzgussvorrichtung in einer geöffneten Stellung der Spritzgussform, in welcher ein Schaftmaterial eingelegt wird;
Fig. 2 eine schematische Schnittansicht der Spritzgussvorrichtung gemäß Fig. 1, jedoch in einer geschlossenen Stellung;
Fig. 3 eine schematische Ansicht auf das aus der Spritzgussform entnommene Schaftmaterial;
Fig. 4 eine schematische Ansicht auf einen Leisten, über welchen das mit einem Kunststoffmaterial verstärkte, flexible Schaftmaterial gezogen ist;
Fig. 5 eine Ansicht auf den mit dem Schaftmaterial überzogenen Leisten sowie eine mit dem Schaft zu verbindende Sohle; und
Fig. 6 eine Schnittansicht durch den fertiggestellten Schuh gemäß der Linie VI-VI in Fig. 5.

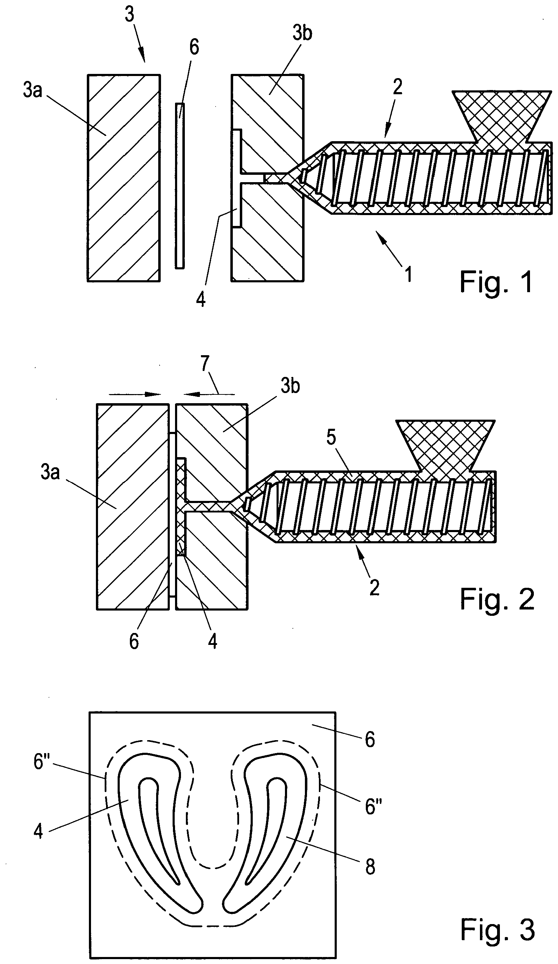

In Fig. 1 ist eine Spritzgussvorrichtung 1 mit einer Schnecke 2 und einer sich aus zwei Formhälften 3a, 3b zusammensetzenden Spritzgussform 3 in geöffnetem Zustand gezeigt. Die Spritzgussform 3 weist hierbei einen Hohlraum 4 auf, in welchen mit Hilfe der Schnecke 2 verflüssigtes Kunststoffmaterial 5 eingebracht wird und somit auf ein in die Spritzgussform eingelegtes Schaftmaterial 6 aufgespritzt wird. Hierzu wird das Schaftmaterial 6 im geöffneten Zustand der Spritzgussform 3 zunächst in diese eingelegt, anschließend werden die Formhälften 3a, 3b durch Kraftaufbringung in Pfeilrichtung 7 geschlossen, so dass auf das Schaftmaterial 6 dann der flüssige Kunststoff 5, der in den Hohlraum 4 eintritt, aufgespritzt wird.

Das Schaftmaterial 6 besteht hierbei aus einem flexiblen Schaftmaterial, z.B. einem textilen Gewebe, einem Vlies, einem Kunststoffmaterial, das sreduce the publication feeich an den Rist eines Benutzers des Schuhs anschmiegen kann; auch weiche Leder oder Kombinationen hiervon können verwendet werden. Zudem weist das Schaftmaterial 6 eine Kunststoffbeschichtung, vorzugsweise aus PVC oder auch Polyurethan, auf, um eine gute Verbindung im Spritzgussverfahren mit dem Kunststoffmaterial 5, welches vorzugsweise aus thermoplastischen Polyurethanen besteht, erzielen zu können.

Nachdem der verflüssigte Kunststoff nach Schließen der Formhälften 3a, 3b auf das Schaftmaterial 6 aufgespritzt wurde, wird das Kunststoffmaterial in der geschlossenen Spritzgussform 3 abgekühlt, so dass der Kunststoff erstarrt.

Nach dem Erstarren des Kunststoffes kann das in Fig. 3 dargestellte Zwischenprodukt aus der Spritzgussform 3 entnommen werden. Hierbei sind in Fig. 3 zwei rahmenförmige Verstärkungselemente 8 gezeigt, wobei die Verstärkungselemente 8 selbstverständlich auch flächig ausgebildet sein können. Nach Entnahme des Schaftmaterials 6 mit den aufgespritzten Verstärkungselementen 8 wird, wie in Fig. 3 mit strichlierter Linie 6" gezeigt, im zweidimensionalen Zustand des Schaftmaterials 6 die für den Schuh erforderliche Schaftkontur zugeschnitten. Anschließend werden, wie in der Schuhmacherbranche üblich, weitere Teile des Schuhs, wie z.B. eine Fersenkappe oder dergl., mittels Nähen, Kleben etc., allenfalls unter Verwendung sog. Untertritte bzw. Schärfschnitte, zu einem Rohschaft zusammengefügt.

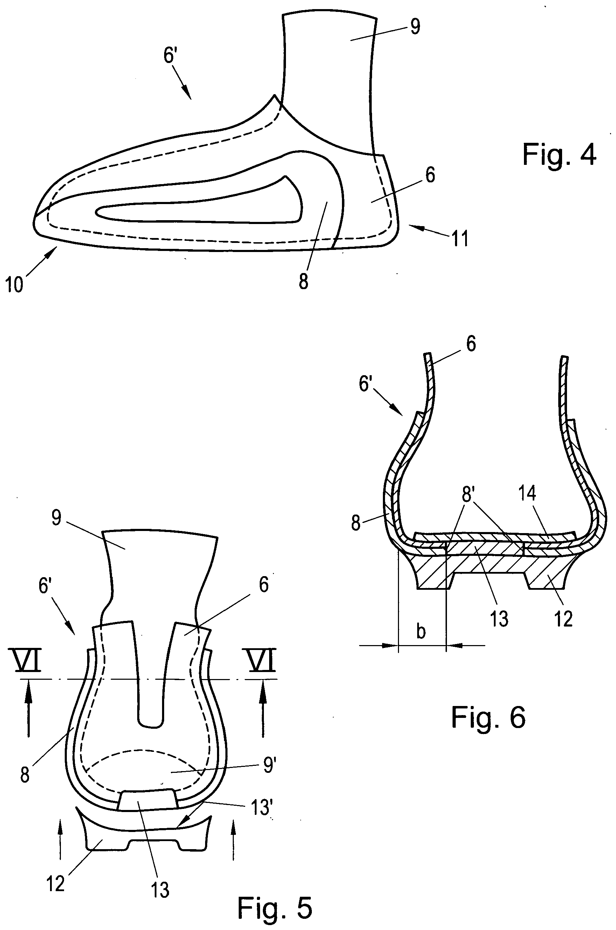

Dieser Rohschaft wird sodann, wie in den Fig. 4 und 5 gezeigt, über einen Leisten 9 gezogen, so dass das Schaftmaterial 6, ebenso wie die aus dem verstärkenden Kunststoffmaterial 5 bestehenden Verstärkungselemente 8, zu einem dreidimensionalen Schaft 6' geformt wird. Wie insbesondere in Fig. 4 ersichtlich, ist bei dem gezeigten Ausführungsbeispiel im Wesentlichen innen- und außenseitig ein rahmenförmiges Versteifungselement 8 vorgesehen, welches sich - seitlich gesehen - ca. von Höhe des Knöchels bis in den Zehenbereich nach vor erstreckt, wobei eine obere Rahmenstrebe vorzugsweise nach vorne zur Schuhspitze hin abfallend angeordnet ist. Ein Fersenbereich 11 wird von den Verstärkungselementen 8 hierbei nicht umfasst, so dass etwaige Druckstellen aufgrund einer erhöhten Steifigkeit im Fersenbereich vermieden werden können. Zudem wird das Schaftmaterial 6 samt den Verstärkungselementen 8 auf die Sohlenseite 9' des Leistens 9 gezogen, so dass sich nach Aufbringen einer Sohle 12 (vgl. Fig. 5) ein inniger, eine hohe Torsionsstabilität aufweisender Verbund zwischen Sohle 12, Verstärkungselementen 8 und Schaftmaterial 6 ergibt.

In Fig. 5 ist insbesondere ersichtlich, dass, bevor die Sohle 12 mit dem Schaftmaterial 6 verbunden wird, ein Ausgleichselement 13 in einem Bereich zwischen innenseitigen Rändern 8' (vgl. Fig. 6) der Verstärkungselemente 8 angeordnet wird, so dass die sohlenseitig vorgesehene Fläche des Schafts 6' im Wesentlichen vollflächig mit der dem Schaft 6' zugewandten Oberseite 13' der Sohle verbunden werden kann. Sofern eine sehr hohe Torsionssteifigkeit des gesamten Schuhs gewünscht ist, kann das Ausgleichselement 13 aus einem besonders torsionssteifen Material, wie Karbon- oder Glasfaser-verstärktem Kunststoff, bestehen.

In Fig. 6 ist ein Schnitt durch den fertiggestellten Schuh gemäß der Linie VI-VI in Fig. 5 gezeigt, nachdem der Leisten 9 aus dem Schaft 6' entnommen wurde und die Sohle 12 mit dem Schaft 6' verbunden wurde. Hierbei ist eine Brandsohle 14 ersichtlich, mit welcher das Schaftmaterial 6 bzw. die Verstärkungselemente 8 zuvor in einem sog. Zwickvorgang vernäht oder verklebt werden, so dass die dreidimensionale Form des Schafts 6' sichergestellt ist. Die Verstärkungselemente 8 erstrecken sich hierbei sohlenseitig zumindest um die Breite b von ca. 10mm vom äußeren Rand der Sohle 12 nach innen.

Alternativ zu dem in Fig. 6 gezeigten Ausgleichselement 13 können die Ränder 8' des Versteifungselements 8 auch im Wesentlichen aneinander anschließen, so dass das Ausgleichselement 13 entfallen kann. Insbesondere in diesem Fall können die Kunststoffmaterialien des Versteifungselements 8 und der Sohle 12 für einen innigen Verbund durch ein Schweißverfahren, z.B. Hochfrequenzschweißen oder Ultraschweißen, miteinander verbunden werden.

## Patentansprüche

1. Verfahren zur Herstellung eines Schuhs, insbesondere Sportschuhs, mit einem ein flexibles Schaftmaterial (6) aufweisenden Schaft (6') und einer Sohle (12), wobei das flexible Schaftmaterial (6) in eine Spritzgussform (3) eingelegt wird, ein Kunststoffmaterial (5) abschnittsweise auf das Schaftmaterial (6) aufgespritzt wird, und das mit dem Kunststoffmaterial (5) verstärkte Schaftmaterial (6) aus der Spritzgussform (3) entnommen wird, **dadurch gekennzeichnet, dass** das mit dem Kunststoffmaterial verstärkte Schaftmaterial zur Ausbildung der gewünschten Form des Schaftes (6') über einen Leisten (9) gezogen wird, wobei das das Schaftmaterial (6) verstärkende Kunststoffmaterial (5) zumindest abschnittsweise auf eine Sohlenseite (9') des Leistens (9) gezogen wird, bevor die Sohle (12) mit dem Schaft (6') verbunden wird.

2. Verfahren nach Anspruch 1, **dadurch gekennzeichnet, dass** das Schaftmaterial (6) in Form einer planen Fläche in die Spritzgussform (3) eingelegt wird.

3. Verfahren nach Anspruch 1 oder 2, **dadurch gekennzeichnet, dass** das Schaftmaterial (6) auf die gewünschten Konturen (6'') nach der Entnahme aus der Spritzgussform (3) zugeschnitten wird.

4. Verfahren nach einem der Ansprüche 1 bis 3, **dadurch gekennzeichnet, dass** vor dem Überziehen über den Leisten (9) weitere Teile des Schuhs, insbesondere eine Fersenkappe, mit dem Schaftmaterial (6) verbunden werden.

5. Verfahren nach Anspruch 4, **dadurch gekennzeichnet, dass** ein Ausgleichselement (13) zwischen beabstandeten sohlenseitigen Rändern (8') des mit dem Kunststoffmaterial (5) verstärkten Schaftmaterials (6) angeordnet wird, bevor die Sohle (12) mit dem Schaft (6') verbunden wird.

6. Verfahren nach Anspruch 4 oder 5, **dadurch gekennzeichnet, dass** das das Schaftmaterial (6) verstärkende Kunststoffmaterial (5) mit der Sohle (12) verklebt oder verschweißt wird.

7. Schuh, insbesondere Sportschuh, mit einem ein flexibles Schaftmaterial (6) aufweisenden Schaft (6'), der zumindest abschnittsweise, vorzugsweise in einem Bereich des Vorfußes, ein Verstärkungselement (8) aufweist, das aus einem Kunststoffmaterial (4) größerer Härte als das Schaftmaterial (6) besteht, wobei der Schaft (6') mit einer Sohle (12) verbunden ist, wobei das Verstärkungselement (8) auf dem flexiblen Schaftmaterial (6) aufgespritzt ist, **dadurch gekennzeichnet, dass** das Verstärkungselement (8) zumindest abschnittsweise in einem an die Sohle (12) angrenzenden Bereich des Schafts (6') vorgesehen ist, wobei sich das Verstärkungselement (8) bis in den Bereich zwischen der Sohle (12) und einem sohlenseitigen Schaftabschnitt hineinerstreckt.

8. Schuh nach Anspruch 7, **dadurch gekennzeichnet, dass** die sohlenseitige Erstreckungsbreite (b) des Verstärkungselements (8) zumindest in einem Bereich mindestens 10mm beträgt.

9. Schuh nach Anspruch 7 oder 8, **dadurch gekennzeichnet, dass** zwischen beabstandeten sohlenseitigen Rändern (8') des Verstärkungselements (8) ein Ausgleichselement (13) angeordnet ist.

10. Schuh nach Anspruch 9, **dadurch gekennzeichnet, dass** das Ausgleichselement (13) aus einem Material besteht, das ein Elastizitätsmodul größer 200 MPa aufweist, vorzugsweise einem Karbon- oder Glasfaser-verstärkten Kunststoff.

11. Schuh nach Anspruch 7 oder 8, **dadurch gekennzeichnet, dass** das Verstärkungselement (8) im Wesentlichen die gesamte Fläche der dem Schaft (6') zugewandten Seite der Sohle (12) bedeckt.

12. Schuh nach einem der Ansprüche 7 bis 11, **dadurch gekennzeichnet, dass** als Schaftmaterial (6) ein eine Kunststoff-Beschichtung, insbesondere eine Beschichtung aus Polyvinylchlorid (PVC) oder Polyurethan (PUR), aufweisendes Gewebe oder Vlies vorgesehen ist.

13. Schuh nach einem der Ansprüche 7 bis 12, **dadurch gekennzeichnet, dass** das Kunststoffmaterial (5) des Verstärkungselements (8) einen Härtegrad nach Shore A zwischen 40 und 90 aufweist.

14. Schuh nach Anspruch 13, **dadurch gekennzeichnet, dass** das Verstärkungselement (8) aus einem thermoplastischen Polyurethan besteht.

## Claims

1. Method for manufacturing a shoe, in particular a sports shoe, comprising an upper (6') having a flexible upper material (6), and a sole (12), the flexible upper material (6) being placed in an injection mould (3), a plastics material (5) being injected onto the upper material (6) in portions, and the upper material (6) reinforced by the plastics material (5) being removed from the injection mould (3), **characterised in that** the upper material reinforced by the plastics material is pulled over a last (9) in order to form the desired shape of the upper (6'), the plastics material (5) reinforcing the upper material (6) being pulled onto a sole side (9') of the last (9), at least in portions, prior to the sole (12) being bonded to the upper (6').

2. Method according to claim 1, **characterised in that** the upper material (6) is placed into the injection mould (3) in the form of a planar sheet.

3. Method according to either claim 1 or claim 2, **characterised in that** the upper material (6) is tailored to the desired contours (6") after being removed from the injection mould (3).

4. Method according to any of claims 1 to 3, **characterised in that**, before being pulled over the last (9), further parts of the shoe, in particular a heel cap, are bonded to the upper material (6).

5. Method according to claim 4, **characterised in that** a balance element (13) is arranged between spaced-apart sole-side edges (8') of the upper material (6) reinforced by the plastics material (5), prior to the sole (12) being bonded to the upper (6').

6. Method according to either claim 4 or claim 5, **characterised in that** the plastics material (5) reinforcing the upper material (6) is glued or welded to the sole (12).

7. Shoe, in particular a sports shoe, comprising an upper (6') that has a flexible upper material (6), which upper has, at least in portions, preferably in the region of the forefoot, a reinforcing element (8) that consists of a plastics material (4) of greater hardness than the upper material (6), the upper (6') being bonded to a sole (12), the reinforcing element (8) being injected onto the flexible upper material (6), **characterised in that** the reinforcing element (8) is provided at least in portions in a region of the upper (6') that adjoins the sole (12), the reinforcing element (8) extending into the region between the sole (12) and a sole-side upper portion.

8. Shoe according to claim 7, **characterised in that** the sole-side extension width (b) of the reinforcing element (8) is at least 10 mm, at least in one region.

9. Shoe according to either claim 7 or claim 8, **characterised in that** a balance element (13) is arranged between spaced-apart sole-side edges (8') of the reinforcing element (8).

10. Shoe according to claim 9, **characterised in that** the balance element (13) consists of a material that has a modulus of elasticity greater than 200 MPa, preferably a carbon-fibre or glass-fibre reinforced plastics material.

11. Shoe according to either claim 7 or claim 8, **characterised in that** the reinforcing element (8) covers substantially the entire area of the side of the sole (12) facing the upper (6').

12. Shoe according to any of claims 7 to 11, **characterised in that** a woven or non-woven fabric comprising a plastics coating, in particular a coating of polyvinyl chloride (PVC) or polyurethane (PUR), is provided as the upper material (6).

13. Shoe according to any of claims 7 to 12, **characterised in that** the plastics material (5) of the reinforcing element (8) has a Shore A hardness of between 40 and 90.

14. Shoe according to claim 13, **characterised in that** the reinforcing element (8) consists of a thermoplastic polyurethane.

## Revendications

1. Procédé de fabrication d'une chaussure, plus particulièrement d'une chaussure de sport, avec une tige (6') comprenant un matériau de tige flexible (6) et une semelle (12), le matériau de tige flexible (6) étant inséré dans un moule de moulage par injection (3), une matière plastique (5) étant injectée par endroits sur le matériau de tige (6), et le matériau de tige (6) renforcé à l'aide de la matière plastique (5) est retirée du moule de moulage par injection (3), **caractérisé en ce que** le matériau de tige renforcé à l'aide de la matière plastique est étiré sur une forme (9) afin d'obtenir la forme souhaitée de la tige (6'), la matière plastique (5) renforçant le matériau de tige (6) étant étirée au moins par endroits sur un côté de semelle (9') de la forme (9), avant que la semelle (12) soit reliée avec la tige (6').

2. Procédé selon la revendication 1, **caractérisé en ce que** le matériau de tige (6) est inséré sous la forme d'une surface plane dans le moule de moulage par injection (3).

3. Procédé selon la revendication 1 ou 2, **caractérisé en ce que** le matériau de tige (6) soit découpé au contour (6") souhaité après le retrait du moule de moulage par injection (3).

4. Procédé selon l'une des revendications 1 à 3, **caractérisé en ce que**, avant l'étirement sur la forme (9), d'autres parties de la chaussure, plus particulièrement un contrefort, sont reliées avec le matériau de tige (6).

5. Procédé selon la revendication 4, **caractérisé en ce qu'**un élément de compensation (13) est disposé entre des bords côté semelle (8'), écartés entre eux, du matériau de tige (6) renforcé à l'aide de la matière plastique (5), avant que la semelle (12) ne soit reliée avec la tige (6').

6. Procédé selon la revendication 4 ou 5, **caractérisé en ce que** la matière plastique (5) renforçant le matériau de tige (6) est collée ou soudée avec la semelle (12).

7. Chaussure, plus particulièrement chaussure de sport, avec une tige (6') comprenant un matériau de tige flexible (6), qui comprend, au moins par endroits, de préférence dans une zone de l'avant-pied, un élément de renfort (8), qui est constitué d'une matière plastique (4) d'une dureté supérieure à celle du matériau de tige (6), la tige (6') étant reliée avec une semelle (12), l'élément de renfort (8) étant injecté sur le matériau de tige flexible (6), **caractérisée en ce que** l'élément de renfort (8) est prévu au moins par endroits dans une zone de la tige (6') adjacente à la semelle (12), l'élément de renfort (8) s'étendant jusque dans la zone entre la semelle (12) et une partie de tige côté semelle.

8. Chaussure selon la revendication 7, **caractérisée en ce que** la largeur d'extension côté semelle (b) de l'élément de renfort (8) est d'au moins 10 mm au moins dans une zone.

9. Chaussure selon la revendication 7 ou 8, **caractérisée en ce que**, entre des bords côté semelle (8'), écartés entre eux, de l'élément de renfort (8), est disposé un élément de compensation (13).

10. Chaussure selon la revendication 9, **caractérisée en ce que** l'élément de compensation (13) est constitué d'un matériau qui présente un module d'élasticité supérieur à 200 MPa, de préférence d'une matière plastique renforcée par des fibres de carbone ou des fibres de verre.

11. Chaussure selon la revendication 7 ou 8, **caractérisée en ce que** l'élément de renfort (8) recouvre globalement l'ensemble de la surface du côté de la semelle (12) orienté vers la tige (6').

12. Chaussure selon l'une des revendications 7 à 11, **caractérisé en ce que**, en tant que matériau de tige (6), un tissu ou un matériau non-tissé comprenant un revêtement en matière plastique, plus particulièrement un revêtement en polychlorure de vinyle (PVC) ou en polyuréthane (PUR), est prévu.

13. Chaussure selon l'une des revendications 7 à 12, **caractérisé en ce que** la matière plastique (5) de l'élément de renfort (8) présente une dureté Shore A entre 40 et 90.

14. Chaussure selon la revendication 13, **caractérisée en ce que** l'élément de renfort (8) est constitué d'un polyuréthane thermoplastique.
